# EUROPEAN PATENT SPECIFICATION

(11) **EP 3 736 188 B1**
(45) Date of publication and mention of the grant of the patent: **03.05.2023**
(21) Application number: 18899401.6
(22) Date of filing: 28.08.2018
(51) Int. Cl.: B60T 13/36, B61H 9/00, B60T 13/66, B60T 13/68

(54) **LOCOMOTIVE AND BRAKE STATE TRANSITION CONTROL SYSTEM THEREFOR**
LOKOMOTIVE UND SYSTEM ZUR STEUERUNG DES BREMSZUSTANDÜBERGANGS DAFÜR
LOCOMOTIVE ET SYSTÈME DE COMMANDE DE TRANSITION D'ÉTAT DE FREIN ASSOCIÉ

(30) Priority: 09.01.2018 CN 201810018330
(43) Date of publication of application: 11.11.2020
(73) Proprietor: CRRC Zhuzhou Locomotive Co., Ltd., Zhuzhou, Hunan 412001 (CN)
(72) Inventor: HUANG, Jinhu, Zhuzhou, Hunan 412001 (CN); FANG, Changzheng, Zhuzhou, Hunan 412001 (CN); DUAN, Jichao, Zhuzhou, Hunan 412001 (CN); MAO, Jinhu, Zhuzhou, Hunan 412001 (CN); LI, Dan, Zhuzhou, Hunan 412001 (CN); ZHANG, Juan, Zhuzhou, Hunan 412001 (CN)
(74) Representative: Behr, Wolfgang
(86) International application number: PCT/CN2018/102615
(87) International publication number: WO 2019/137017

(56) References cited:
- WO-A1-2016/116260
- CN-A- 105 383 473
- CN-A- 106 394 599
- CN-A- 108 162 938
- CN-U- 205 149 845
- CN-U- 206 475 873
- JP-A- 2015 137 028

## Description

### FIELD

The present application relates to the technical field of locomotives, and in particular, to a locomotive and a braking state switching control system therefor.

### BACKGROUND

As is well known, when a railway locomotive is under different environmental conditions, an air brake system thereof needs to be switched to different states, for example, a main control state in which the locomotive functions as a main control locomotive, a coupled state in which the locomotive functions as a coupled locomotive, and a deadhead state in which the locomotive is returned unpowered.

In the conventional technology, the switching between states of the air brake system is very complicated when the locomotive switches between different environmental conditions. For switching between different states, it is often needed to operate switching valves and different cocks and other components. If some components operate abnormally, it will affect realization of functions and driving safety.

CN105383473A provides an air brake valve for a locomotive. The air brake valve comprises an operating valve which is connected with a train pipe air channel and an auxiliary air cylinder air channel; the operating valve is further connected with a first port of a two-way valve; the two-way valve is further provided with a second port and a two-way valve outlet; the second port is connected with an emergency pressure regulating valve through a two-position three-way reversing valve; the emergency pressure regulating valve communicates with a main air channel; a first control valve port communicating with the train pipe air channel is arranged at one end of the two-position three-way reversing valve; the two-way valve outlet is connected with a mode switching loop capable of communicating with a brake cylinder air channel.

CN205149845U discloses a machine vehicle air brake valve, including an application valve, the application valve is connected with train pipe gas circuit, auxiliary reservoir gas circuit, and the application valve still is connected with the first port of a two -way valve, still is provided with the export of second port and two -way valve on the two -way valve, and the second port is connected with an urgent air -vent valve through two -position three way switching -over valve, urgent air -vent valve and total general mood way intercommunication, and the one end of two -position three way switching -over valve is provided with the first control valve port that feeds through with train pipe gas circuit, the two -way valve exit linkage has the mode conversion return circuit of ability and checking cylinder gas circuit intercommunication.

CN108162938A discloses a braking state conversion control system. The braking state conversion control system comprises a fire free loopback channel, a main control channel, and a control device, wherein one end of the fire free loopback channel is used for being connected with a train pipe, and the other end of the fire free loopback channel is used for being connected with a braking air storingcylinder pipe; one end of the main control channel is used for being connected with the train pipe, and the other end of the main control channel is used for being connected with a main blast line; and the control device is used for controlling the connection and disconnection between fire free loopback channel and the main control channel.

CN106394599A discloses a vehicle and an unpowered return conversion system thereof. The unpowered return conversion system comprises a trigger switch, a main air conversion valve and a parking brake pipe conversion valve, wherein a train pipe air source is connected with a main air pipe load through the main air conversion valve; the train pipe air source is connected with a parking brake pipe through the parking brake pipe conversion valve; the trigger switch is electrically connected with the main air conversion valve and the parking brake pipe conversion valve respectively; and the conversion action of the main air conversion valve and the conversion action of the parking brake pipe conversion valve are respectively controlled through the on-off condition of the trigger switch.

CN206475873U provides a fireless return device of locomotive, connect in the braking cashier's office in a shop, including relief pressure valve, still include check valve with relief pressure valve parallelly connected setting, install on gas circuit board relief pressure valve and check valve, gas circuit board have first opening that can meet with checking cylinder gas interface, and connect in cold locomotive system earthen pipe second opening on the road, first opening and second opening are located the both ends of check valve, when gas flows to first opening from second opening, open check valve.

WO2016116260A discloses a brake modulator for a compressed air braking system of a vehicle, wherein the brake modulator has a main housing and two relay valves which are configured in the main housing and are spaced apart in an axial direction of the main housing. Each relay valve is configured with an aerating valve seat and a ventilating valve seat and a ventilating position, wherein the compressed air inputs are connected via a transverse bore to a common compressed air connector and an aerating duct extends in the axial direction in each relay valve between the transverse bore and the aerating valve seat. It is provided that the relay valves have insert guide bodies which are inserted into a longitudinal bore of the main housing, which longitudinal bore extends in the axial direction, and said relay valves in each case have the aerating duct.

JP2015137028A discloses a snow resistant braking device for a freight car that performs snow resistant braking for a freight car connected to a locomotive. The freight car is provided with a brake cylinder, a BC pipe (air duct) connected to the brake cylinder, an electromagnetic valve for opening/closing the BC pipe, and a pressure detection part for detecting the pressure of the brake cylinder. The locomotive is provided with a snow resistant brake switch for switching ON/OFF of the snow resistant brake, and a brake command detection part for detecting ON/OFF of a brake command of the locomotive.

### SUMMARY

An object of the present invention is to provide a locomotive and a braking state switching control system thereof, which can conveniently realize switching of the locomotive between a main control mode, a coupled mode and a deadhead mode, and significantly improve the switching efficiency.

This object is solved by a braking state switching control system according to claim 1. Preferred embodiments of the present invention form the subject matter of the dependent claims.

To achieve the above object, the present invention provides a braking state switching control system, including:
a deadhead return passage, where one end of the deadhead return passage is connected to a train pipe, and another end of the deadhead return deadhead return passage is connected to a brake air reservoir pipe;
a main control passage, where one end of the main control passage is connected to the train pipe, and another end of the main control passage is connected to a main air pipe; and
a control device, where the control device is configured to turn on and turn off the deadhead return passage and the main control passage, to:
   control, in a case that a locomotive is in a deadhead state, the deadhead return passage to be turned on and the main control passage to be turned off, so that the train pipe charges the brake air reservoir pipe in reverse;
   control, in a case that the locomotive functions as a main control locomotive, the main control passage to be turned on and the deadhead return passage to be turned off, so that the main air pipe charges the train pipe; and
   control, in a case that the locomotive is in a coupled state, both the deadhead return passage and the main control passage to be turned off.

Preferably, the deadhead return passage includes an deadhead shut-off valve, where the deadhead shut-off valve is connected with a deadhead shut-off electromagnetic valve, and in a case that the deadhead shut-off electromagnetic valve is powered off, the deadhead shut-off valve is reset, so that the deadhead return passage is turned on; and
the main control passage includes a charge shut-off valve, where the charge shut-off valve is connected with a charge shut-off electromagnetic valve, and in a case that the charge shut-off electromagnetic valve is powered on, the charge shut-off valve is reset, so that the main control passage is turned on.

Preferably, the deadhead return passage further includes a double pressure comparison valve, a check valve, a first flow limiting hole, a cut-out cock and a pressure switch for detecting a pressure of the train pipe that are sequentially connected, where the deadhead shut-off valve is located between the check valve and the first flow limiting hole, the pressure switch is located close to the train pipe, the double pressure comparison valve is located close to the brake air reservoir pipe, one comparison port of the double pressure comparison valve is connected with a second flow limiting hole, and another comparison port of the double pressure comparison valve is connected with the brake air reservoir pipe after merging with an outlet end of the second flow limiting hole.

Preferably, the main control passage further includes a relay valve connected with the charge shut-off valve, where an air inlet of the relay valve is connected to the main air pipe, an air outlet of the relay valve is connected to an air inlet of the charge shut-off valve, and an air outlet of the charge shut-off valve is connected to the train pipe.

Preferably, the pressure switch is specifically a pressure switch that is turned off in a case that a pressure of the train pipe is detected to be lower than a preset pressure and is turned on in a case that the pressure of the train pipe is detected to be greater than the preset pressure, where a range of the preset pressure is from 460kPa to 480kPa.

Preferably, an air inlet of the deadhead shut-off electromagnetic valve is connected with the brake air reservoir pipe, and an air outlet of the deadhead shut-off electromagnetic valve is connected with a reversing control unit of the deadhead shut-off valve.

Preferably, an air inlet of the charge shut-off electromagnetic valve is connected with the main air pipe, and an air outlet of the charge shut-off electromagnetic valve is connected with a reversing control unit of the charge shut-off valve.

Preferably, the control device includes a state button and a central control unit, the state button is connected with the central control unit, and the central control unit is connected with the deadhead shut-off electromagnetic valve and the charge shut-off electromagnetic valve;
where the central control unit includes a powering control unit for controlling powering-on and powering-off of the deadhead shut-off electromagnetic valve and the charge shut-off electromagnetic valve according to different touch instructions received by the state button.

Preferably, the control device further includes a console occupancy switch, and the console occupancy switch is connected with the central control unit;
where the central control unit further includes a parking detection unit for determining whether the locomotive is in a stopped state after the console occupancy switch is turned on, and the parking detection unit is connected with the powering control unit, so that the powering control unit controls powering-on and powering-off of the deadhead shut-off electromagnetic valve and the charge shut-off electromagnetic valve according to different touch instructions received by the state button in a case that the locomotive is in the stopped state.

Preferably, the powering control unit includes:
a main control mode control unit, configured to output a high level to both the deadhead shut-off electromagnetic valve and the charge shut-off electromagnetic valve in a case that the state button is pressed for an even number of times, to control the main control passage to be turned on and the deadhead return passage to be turned off, so that the main air pipe charges the train pipe;
a coupled mode control unit, configured to output a high level to the deadhead shut-off electromagnetic valve and output a low level to the charge shut-off electromagnetic valve in a case that the state button is pressed for an odd number of times and a pressing time is within a preset time range, to control both the deadhead return passage and the main control passage to be turned off; and
a deadhead mode control unit, configured to output a low level to both the deadhead shut-off electromagnetic valve and the charge shut-off electromagnetic valve in a case that the state button is pressed for an odd number of times and the pressing time exceeds the preset time range, to control the deadhead return passage to be turned on and the main control passage to be turned off, so that the train pipe charges the brake air reservoir pipe in reverse.

Preferably, the main control mode control unit further includes an indicator lamp main control mode control subunit for controlling an indicator lamp to operate in a first state in a case that a high level is outputted to both the deadhead shut-off electromagnetic valve and the charge shut-off electromagnetic valve;
the coupled mode control unit further includes an indicator lamp coupled mode control subunit for controlling the indicator lamp to operate in a second state in a case that a high level is outputted to the deadhead shut-off electromagnetic valve and a low level is outputted to the charge shut-off electromagnetic valve; and
the deadhead mode control unit further includes an indicator lamp deadhead mode control subunit for controlling the indicator lamp to operate in a third state in a case that a low level is outputted to both the deadhead shut-off electromagnetic valve and the charge shut-off electromagnetic valve.

The present invention further provides a locomotive, including the braking state switching control system described in any one of the above.

Compared with the technology mentioned in the background section, in the braking state switching control system according to the present invention, one end of the deadhead return passage is connected to the train pipe, and another end of the deadhead return passage is connected to the brake air reservoir pipe; one end of the main control passage is connected to the train pipe, and another end of the main control passage is connected to the main air pipe; and the control device is configured to turn on and turn off the deadhead return passage and the main control passage. In a case that the locomotive is in a deadhead state, the control device controls the deadhead return passage to be turned on, and controls the main control passage to be turned off, so that the train pipe charges the brake air reservoir pipe in reverse; in a case that the locomotive functions as a main control locomotive, the control device controls the main control passage to be turned on, and controls the deadhead return passage to be turned off, so that the main air pipe charges the train pipe; and in a case that the locomotive is in a coupled state, the control device controls both the deadhead return passage and the main control passage to be turned off. In this way, the switching of the locomotive between the main control mode, the coupled mode and the deadhead mode is readily realized, and the switching efficiency is significantly improved.

### BRIEF DESCRIPTION OF THE DRAWINGS

For clearer illustration of the technical solutions according to embodiments of the present invention or conventional technologies, hereinafter briefly described are the drawings to be applied in embodiments of the present invention or conventional techniques. Apparently, the drawings in the following descriptions are only some embodiments of the present invention, and other drawings may be obtained by those skilled in the art based on the provided drawings without creative efforts.
FIG 1 is a schematic diagram of air paths of a braking state switching control system according to an embodiment of the present invention;
FIG 2 is an electric schematic diagram of Figure 1; and
FIG 3 is a control flow chart of a braking state switching control system according to an embodiment of the present invention.

### DETAILED DESCRIPTION OF EMBODIMENTS

Hereinafter technical solutions in embodiments of the present invention are described clearly and completely in conjunction with the drawings in embodiments of the present closure. Apparently, the described embodiments are only some rather than all of the embodiments of the present invention.

In order to enable those skilled in the art to better understand the solution of the present invention, the present invention will be further described in further detail below with reference to the accompanying drawings and specific embodiments.

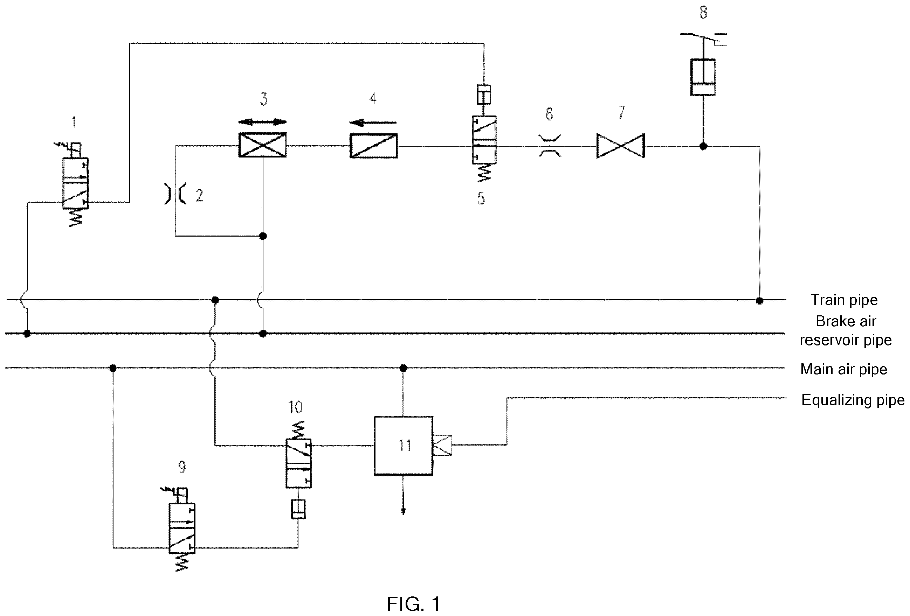

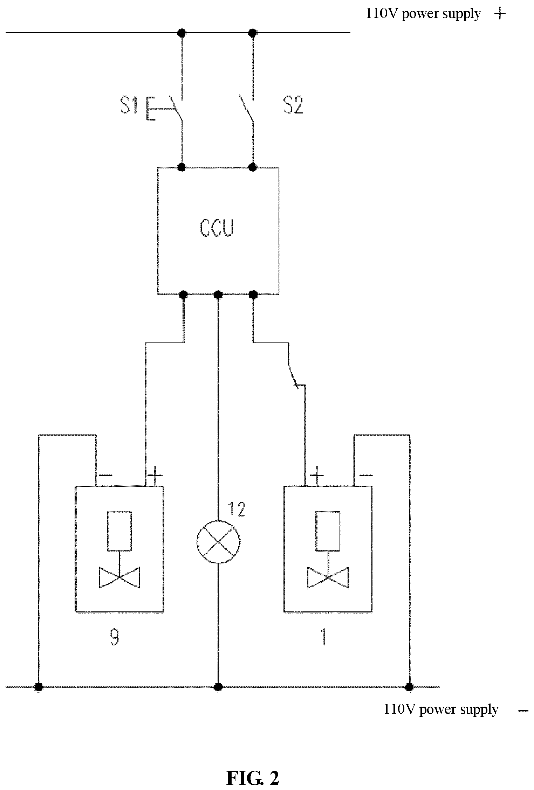

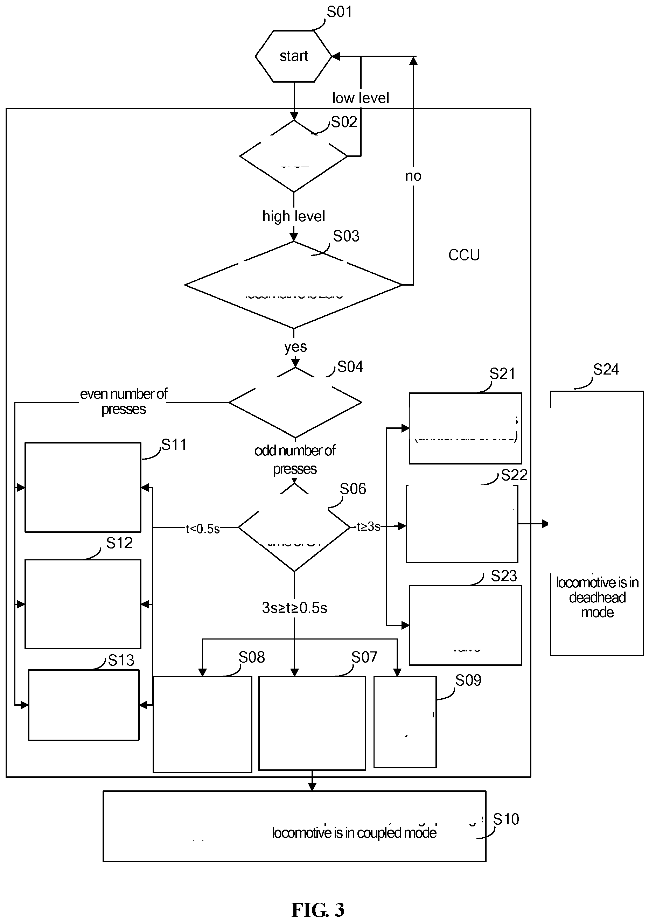

Referring to FIG 1, FIG 2 and FIG 3, FIG 1 is a schematic diagram of air paths of a braking state switching control system according to an embodiment of the present invention, FIG 2 is an electric schematic diagram of FIG 1, and FIG 3 is a control flow chart of a braking state switching control system according to an embodiment of the present invention.

The present invention provides a braking state switching control system, which mainly includes a deadhead return passage, a main control passage and a control device. When the deadhead return passage is turned on, a locomotive can automatically switch to a deadhead mode when powered off, where one end of the deadhead return passage is connected to a train pipe, and another end of the deadhead return passage is connected to a brake air reservoir pipe. That is, in a case that the locomotive is powered off, the train pipe can charge the brake air reservoir pipe in reverse to ensure the braking safety of the locomotive.

One end of the main control passage is connected to the train pipe, and another end of the main control passage is connected to a main air pipe. When the locomotive functions as a main control locomotive, the main control passage is turned on, and the above-described deadhead return passage is turned off; thus, the main air pipe charges the train pipe.

When the locomotive is in a coupled state, both the deadhead return passage and the main control passage are turned off, and the braking of the locomotive relies on other coupled locomotives.

The control device is connected to the deadhead return passage and the main control passage, and can control turning-on and turning-off of the deadhead return passage and the main control passage. That is, in a case that the locomotive is in a deadhead state, the deadhead return passage is controlled to be turned on, and the main control passage is controlled to be turned off, so that the train pipe charges the brake air reservoir pipe in reverse; in a case that the locomotive functions as a main control locomotive, the main control passage is controlled to be turned on, and the deadhead return passage is controlled to be turned off, so that the main air pipe charges the train pipe; and in a case that the locomotive is in a coupled state, both the deadhead return passage and the main control passage are controlled to be turned off.

The braking state switching control system such configured can realize the turning-on and turning-off of the deadhead return passage and the main control passage by using the control device, so as to realize the switching of the locomotive between the main control mode, the coupled mode and the deadhead mode, thereby greatly facilitating the operation process of the operator and significantly improving the switching efficiency. In addition, refer can be made to the conventional technology for the specific definitions of the main control mode, the deadhead mode and the coupled mode, which will not be repeated in the present invention.

For the specific configuration of the deadhead return passage, a deadhead shut-off valve 5 may be provided therefor. The switching of the deadhead shut-off valve 5 is realized by the action of a deadhead shut-off electromagnetic valve 1, and the deadhead shut-off valve 5 is connected with the deadhead shut-off electromagnetic valve 1. In a case that the deadhead shut-off electromagnetic valve 1 is powered off, the deadhead shut-off valve 5 is reset, so that the deadhead return passage can be turned on.

For the specific configuration of the main control passage, a charge shut-off valve 10 may be provided therefor. The switching of the charge shut-off valve 10 is realized by the action of a charge shut-off electromagnetic valve 9, and the charge shut-off valve 10 is connected with the charge shut-off electromagnetic valve 9. In a case that the charge shut-off electromagnetic valve 9 is powered on, the charge shut-off valve 10 is reset, so that the main control passage can be turned on.

It can be seen with reference to FIG 1 of the specification that when the deadhead shut-off electromagnetic valve 1 is powered off, the deadhead shut-off electromagnetic valve 1 is disconnected from the deadhead shut-off valve 5, and at this time the deadhead shut-off valve 5 is reset. After the deadhead shut-off valve 5 is reset by application of a spring force, the train pipe is connected with the brake air reservoir pipe, that is, the deadhead return passage is turned on, thereby switching to the deadhead mode, so that the train pipe charges the brake air reservoir pipe in reverse.

When the charge shut-off electromagnetic valve 9 is powered on, the charge shut-off electromagnetic valve 9 is connected with the charge shut-off valve 10, and at this time, the charge shut-off valve 10 overcomes a spring force to act and connects the main air pipe with the train pipe, that is, the main control passage is turned on, thereby switching to the main control mode, so that the main air pipe charges the train pipe, and the locomotive can tow other locomotives.

When the deadhead shut-off electromagnetic valve 1 is powered on and the charge shut-off electromagnetic valve 9 is powered off, the deadhead shut-off electromagnetic valve 1 is connected with the deadhead shut-off valve 5. At this time, the deadhead shut-off valve 5 overcomes the spring force to act to disconnect the train pipe from the brake air reservoir pipe, that is, the deadhead return passage is turned off. At the same time, the charge shut-off electromagnetic valve 9 is disconnected from the charge shut-off valve 10, and after the charge shut-off valve 10 is reset by application of a spring force, the main air pipe is disconnected from the train pipe, that is, the main control passage is turned off. In simple terms, when the deadhead shut-off electromagnetic valve 1 is powered on and the charge shut-off electromagnetic valve 9 is powered off, both the deadhead return passage and the main control passage are turned off. At this time, the locomotive switches to the coupled mode, in which the locomotive is towed by other locomotives and the braking of the locomotive is realized by other locomotives.

More specifically, the deadhead return passage further includes a double pressure comparison valve 3, a check valve 4, a first flow limiting hole 6, a cut-out cock 7 and a pressure switch 8 for detecting a pressure of the train pipe that are sequentially connected, where the deadhead shut-off valve 5 is located between the check valve 4 and the first flow limiting hole 6, the pressure switch 8 is close to the train pipe, the double pressure comparison valve 3 is close to the brake air reservoir pipe, one comparison port of the double pressure comparison valve 3 is connected with a second flow limiting hole 2, and another comparison port of the double pressure comparison valve 3 is connected with the brake air reservoir pipe after merging with an outlet end of the second flow limiting hole 2.

The double pressure comparison valve 3 is such configured that when a pressure of a brake air reservoir is greater than a pressure of the train pipe, the deadhead return passage is always in a closed state, to ensure a high pressure of the brake air reservoir can flow back to the train pipe.

Referring to FIG 1 of the specification, an air inlet of the deadhead shut-off electromagnetic valve 1 is connected with the brake air reservoir pipe, and an air outlet of the deadhead shut-off electromagnetic valve 1 is connected with a reversing control unit of the deadhead shut-off valve 5. That is, the control device can control powering-on and powering-off of the deadhead shut-off electromagnetic valve 1, thereby realizing the turning-on and turning-off of the deadhead return passage. In addition, the pressure switch 8 may be set with a preset pressure, and the preset pressure is in a range from 460kPa to 480kPa. In a case that the pressure switch 8 detects that the pressure of the train pipe is greater than the preset pressure, the pressure switch 8 is turned on, that is, the deadhead return passage is turned on. In a case that the pressure switch 8 detects that the pressure of the train pipe is lower than the preset pressure, the pressure switch 8 is turned off, that is, the deadhead return passage is turned off. In simple terms, the deadhead return passage is turned on when both the deadhead shut-off electromagnetic valve 1 is powered off and the pressure of the train pipe is greater than the preset pressure. In this way, it is ensured that there is sufficient air in the train pipe to charge the brake air reservoir pipe in reverse, thereby ensuring the braking of the locomotive in the deadhead mode.

The main control passage further includes a relay valve 11 that is connected with the charge shut-off valve 10, where an air inlet of the relay valve 11 is connected to the main air pipe, an air outlet of the relay valve 11 is connected to an air inlet of the charge shut-off valve 10, and an air outlet of the charge shut-off valve 10 is connected to the train pipe.

Referring to FIG 1 of the specification, an air inlet of the charge shut-off electromagnetic valve 9 is connected with the main air pipe, and an air outlet of the charge shut-off electromagnetic valve 9 is connected with a reversing control unit of the charge shut-off valve 10. Two air inlets of the relay valve 11 are respectively connected to the main air pipe and an equalizing pipe. When the charge shut-off valve 10 overcomes a spring force to act, the air in the main air pipe enters the train pipe after passing through the relay valve 11 and the charge shut-off valve 10, thereby switching to the main control mode.

The above control device may include a state button S1 and a central control unit CCU, and the state button S1 is connected with the central control unit.

The central control unit is connected with the deadhead shut-off electromagnetic valve 1 and the charge shut-off electromagnetic valve 9, and the central control unit includes a powering control unit for controlling powering-on and powering-off of the deadhead shut-off electromagnetic valve 1 and the charge shut-off electromagnetic valve 9 according to different touch instructions received by the state button S 1.

Referring to FIG 2 of the specification, the state button S1 may be provided in the driver's cab. When the driver triggers the state button S1 according to different touch instructions, the powering control unit in the central control unit controls powering-on and powering-off of the deadhead shut-off electromagnetic valve 1 and the charge shut-off electromagnetic valve 9 after receiving different touch instructions. As described above, switching of the locomotive between the main control mode, the coupled mode and the deadhead mode is thereby achieved.

To ensure safe and reliable switching, the control device further includes a console occupancy switch S2, and the console occupancy switch S2 is connected with the central control unit CCU.

The central control unit further includes a parking detection unit for determining whether the locomotive is in a stopped state after the console occupancy switch S2 is turned on, and the parking detection unit is connected with the powering control unit, so that the powering control unit controls powering-on and powering-off of the deadhead shut-off electromagnetic valve 1 and the charge shut-off electromagnetic valve 9 according to different touch instructions received by the state button S1 in a case that the locomotive is in a stopped state.

Specifically, the console occupancy switch S2 may be regarded as a start button of the locomotive. Only when the console occupancy switch S2 is turned on, can the central control unit CCU receive the operation instructions of the state button S 1, and then realize the switching of the locomotive between the main control mode, the coupled mode and the deadhead mode. Referring to FIG 3 of the specification, the flow starts at step S01. In step S02, a signal of the console occupancy switch S2 is checked, that is, whether the console occupancy switch S2 is turned on is determined. In a case that the console occupancy switch S2 is turned on (high level), step S03 is executed, and in a case that the console occupancy switch S2 is not turned on (low level), the flow returns to step S01. Step S03 is executed by the parking detection unit to determine whether a speed of the locomotive is zero at this time, that is, whether the locomotive is in a stopped state. If not, the flow returns to step S01. If the locomotive is in a stopped state, step S04 is executed, wherein the signal of state button S1 is checked, and the powering control unit controls powering-on and powering-off of the deadhead shut-off electromagnetic valve 1 and the charge shut-off electromagnetic valve 9 according to different touch instructions.

The powering control unit includes a main control mode control unit, a coupled mode control unit and a deadhead mode control unit.

The main control mode control unit is configured to output a high level to both the deadhead shut-off electromagnetic valve 1 and the charge shut-off electromagnetic valve 9 in a case that the state button S1 is pressed for an even number of times, to control the main control passage to be turned on and the deadhead return passage to be turned off, so that the main air pipe charges the train pipe.

The coupled mode control unit is configured to output a high level to the deadhead shut-off electromagnetic valve 1 and output a low level to the charge shut-off electromagnetic valve 9 in a case that the state button S1 is pressed for an odd number of times and a pressing time is within a preset time range, to control both the deadhead return passage and the main control passage to be turned off.

The deadhead mode control unit is configured to output a low level to the deadhead shut-off electromagnetic valve 1 and the charge shut-off electromagnetic valve 9 in a case that the state button S1 is pressed for an odd number of times and the pressing time exceeds the preset time range, to control the deadhead return passage to be turned on and the main control passage to be turned off, so that the train pipe charges the brake air reservoir pipe in reverse.

Referring to FIG 3 of the specification, when the state button S1 is pressed for an even number of times, it means that the driver needs to switch the locomotive to the main control mode. At this time, the main control mode control unit outputs a high level to both the deadhead shut-off electromagnetic valve 1 (step S12) and the charge shut-off electromagnetic valve 9 (step S11); thus, the main control passage is turned on and the deadhead return passage is turned off, so that the main air pipe charges the train pipe. In order to prompt the driver and other personnel of the current mode of the locomotive, the main control mode control unit may be provided with an indicator lamp main control mode control subunit for controlling an indicator lamp 12 to operate in a first state. The first state may be a state in which the indicator lamp 12 is off (step S13). That is, when the state button S1 is pressed for an even number of times, the main control passage is turned on and the deadhead return passage is turned off, so that the main air pipe charges the train pipe, and the indicator lamp 12 is off, which corresponds to steps S11 to S13.

When the state button S1 is pressed for an odd number of times and the pressing time is within the preset time range, the powering control unit determines that an unintentional operation is performed, and the current state is maintained. In step S06, the pressing time of the state button S1 is determined. The preset time range in the present invention may be from 0.5s to 3s. When the pressing time is less than 0.5s, the current state is maintained, that is, the main control mode, the coupled mode or the deadhead mode is maintained.

When the state button S1 is pressed for an odd number of times and the pressing time is within the preset time range, that is, when the pressing time is between 0.5s and 3s, the coupled mode control unit outputs a high level to the deadhead shut-off electromagnetic valve 1 (step S08), and outputs a low level to the charge shut-off electromagnetic valve 9 (step S07), to control both the deadhead return passage and the main control passage to be turned off (step S10). In order to prompt the driver and other personnel of the current mode of the locomotive, an indicator lamp coupled mode control subunit may control the indicator lamp 12 to operate in a second state. The second state may be a state in which the indicator lamp 12 is always kept in a turned-on state (step 09). The above process corresponds steps S07 to S10.

When the state button S1 is pressed for an odd number of times and the pressing time is beyond the preset time range, that is, when the pressing time is longer than 3s, the deadhead mode control unit outputs a low level to both the deadhead shut-off electromagnetic valve 1 (step S22) and the charge shut-off electromagnetic valve 9 (step S23), to control the deadhead return passage to be turned on and the main control passage to be turned off (step S24), so that the train pipe charges the brake air reservoir pipe in reverse. In order to prompt the driver and other personnel of the current mode of the locomotive, an indicator lamp deadhead mode control subunit may be configured to control the indicator lamp 12 to operate in a third state. The third state may be a state in which the indicator lamp 12 twinkles (step S21) (it may twinkle once every 0.5s). The above process corresponds to steps S21 to S24.

A locomotive having a braking state switching control system is provided according to the present invention, which includes the braking state switching control system described in the above specific embodiments. For other parts of the locomotive, reference may be made to the conventional technology, which will not be expanded here.

It should be noted that in the specification, relational terms such as first and second are only used to distinguish one entity from several other entities, but do not necessarily require or imply any actual relationship or order between these entities.

## Claims

1. A braking state switching control system, comprising:
a deadhead return passage, wherein one end of the deadhead return passage is connected to a train pipe, and another end of the deadhead return deadhead return passage is connected to a brake air reservoir pipe;
a main control passage, wherein one end of the main control passage is connected to the train pipe, and another end of the main control passage is connected to a main air pipe; and
a control device, wherein the control device is configured to turn on and turn off the deadhead return passage and the main control passage, to:
control, in a case that a locomotive is in a deadhead state, the deadhead return passage to be turned on and the main control passage to be turned off, whereby the train pipe charges the brake air reservoir pipe in reverse;
control, in a case that the locomotive functions as a main control locomotive, the main control passage to be turned on and the deadhead return passage to be turned off, whereby the main air pipe charges the train pipe; and
control, in a case that the locomotive is in a coupled state, both the deadhead return passage and the main control passage to be turned off.

2. The braking state switching control system according to claim 1,
wherein the deadhead return passage comprises a deadhead shut-off valve (5), the deadhead shut-off valve (5) is connected with a deadhead shut-off electromagnetic valve (1), and in a case that the deadhead shut-off electromagnetic valve (1) is powered off, the deadhead shut-off valve (5) is reset, whereby the deadhead return passage is turned on; and
the main control passage comprises a charge shut-off valve (10), wherein the charge shut-off valve (10) is connected with a charge shut-off electromagnetic valve (9), and in a case that the charge shut-off electromagnetic valve (9) is powered on, the charge shut-off valve (10) is reset, whereby the main control passage is turned on.

3. The braking state switching control system according to claim 2, wherein the deadhead return passage further comprises a double pressure comparison valve (3), a check valve (4), a first flow limiting hole (6), a cut-out cock (7) and a pressure switch (8) for detecting a pressure of the train pipe that are sequentially connected, wherein the deadhead shut-off valve (5) is located between the check valve (4) and the first flow limiting hole (6), the pressure switch (8) is located close to the train pipe, the double pressure comparison valve (3) is located close to the brake air reservoir pipe, one comparison port of the double pressure comparison valve (3) is connected with a second flow limiting hole (2), and another comparison port of the double pressure comparison valve (3) is connected with the brake air reservoir pipe after merging with an outlet end of the second flow limiting hole (2).

4. The braking state switching control system according to claim 2, wherein the main control passage further comprises a relay valve (11) connected with the charge shut-off valve (10), an air inlet of the relay valve (11) is connected to the main air pipe, an air outlet of the relay valve (11) is connected to an air inlet of the charge shut-off valve (10), and an air outlet of the charge shut-off valve (10) is connected to the train pipe.

5. The braking state switching control system according to claim 3, wherein the pressure switch (8) is a pressure switch that is turned off in a case that a pressure of the train pipe is detected to be lower than a preset pressure and is turned on in a case that the pressure of the train pipe is detected to be greater than the preset pressure, wherein a range of the preset pressure is from 460kPa to 480kPa.

6. The braking state switching control system according to claim 3, wherein an air inlet of the deadhead shut-off electromagnetic valve (1) is connected with the brake air reservoir pipe, and an air outlet of the deadhead shut-off electromagnetic valve (1) is connected with a reversing control unit of the deadhead shut-off valve (5).

7. The braking state switching control system according to claim 4, wherein an air inlet of the charge shut-off electromagnetic valve (9) is connected with the main air pipe, and an air outlet of the charge shut-off electromagnetic valve (9) is connected with a reversing control unit of the charge shut-off valve (10).

8. The braking state switching control system according to any one of claims 2 to 7, wherein the control device comprises a state button (S 1) and a central control unit, the state button (S 1) is connected with the central control unit, and the central control unit is connected with the deadhead shut-off electromagnetic valve (1) and the charge shut-off electromagnetic valve (9);
wherein the central control unit comprises a powering control unit for controlling powering-on and powering-off of the deadhead shut-off electromagnetic valve (1) and the charge shut-off electromagnetic valve (9) according to different touch instructions received by the state button (S 1).

9. The braking state switching control system according to claim 8, wherein the control device further comprises a console occupancy switch (S2), and the console occupancy switch (S2) is connected with the central control unit;
the central control unit further comprises a parking detection unit for determining whether the locomotive is in a stopped state after the console occupancy switch (S2) is turned on, and the parking detection unit is connected with the powering control unit, whereby the powering control unit controls powering-on and powering-off of the deadhead shut-off electromagnetic valve (1) and the charge shut-off electromagnetic valve (9) according to different touch instructions received by the state button (S 1) in a case that the locomotive is in the stopped state.

10. The braking state switching control system according to claim 8, wherein the powering control unit comprises:
a main control mode control unit, configured to output a high level to both the deadhead shut-off electromagnetic valve (1) and the charge shut-off electromagnetic valve (9) in a case that the state button (S 1) is pressed for an even number of times, to control the main control passage to be turned on and the deadhead return passage to be turned off, whereby the main air pipe charges the train pipe;
a coupled mode control unit, configured to output a high level to the deadhead shut-off electromagnetic valve (1) and output a low level to the charge shut-off electromagnetic valve (9) in a case that the state button (S 1) is pressed for an odd number of times and a pressing time is within a preset time range, to control both the deadhead return passage and the main control passage to be turned off; and
a deadhead mode control unit, configured to output a low level to the deadhead shut-off electromagnetic valve (1) and the charge shut-off electromagnetic valve (9) in a case that the state button (S1) is pressed for an odd number of times and the pressing time exceeds the preset time range, to control the deadhead return passage to be turned on and the main control passage to be turned off, whereby the train pipe charges the brake air reservoir pipe in reverse.

11. The braking state switching control system according to claim 10,
wherein the main control mode control unit further comprises an indicator lamp main control mode control subunit for controlling an indicator lamp to operate in a first state in a case that a high level is outputted to both the deadhead shut-off electromagnetic valve (1) and the charge shut-off electromagnetic valve (9);
the coupled mode control unit further comprises an indicator lamp coupled mode control subunit for controlling the indicator lamp to operate in a second state in a case that a high level is outputted to the deadhead shut-off electromagnetic valve (1) and a low level is outputted to the charge shut-off electromagnetic valve (9); and
the deadhead mode control unit further comprises an indicator lamp deadhead mode control subunit for controlling the indicator lamp to operate in a third state in a case that a low level is outputted to both the deadhead shut-off electromagnetic valve (1) and the charge shut-off electromagnetic valve (9).

12. A locomotive, comprising the braking state switching control system according to any one of claims 1 to 11.

## Patentansprüche

1. Bremszustandschaltsteuersystem, aufweisend:
eine Leerlauf-Rückführpassage, wobei ein Ende der Leerlauf-Rückführpassage mit einem Zugrohr verbunden ist, und ein anderes Ende der Leerlauf-Rückführpassage mit einem Bremsluftreservoirrohr verbunden ist;
eine Hauptsteuerpassage, wobei ein Ende der Hauptsteuerpassage mit dem Zugrohr verbunden ist und ein anderes Ende der Hauptsteuerpassage mit einem Hauptluftrohr verbunden ist; und
eine Steuervorrichtung, wobei die Steuervorrichtung konfiguriert ist, die Leerlauf-Rückführpassage und die Hauptsteuerpassage zu steuern, um:
in einem Fall, dass eine Lokomotive in einem Leerlaufzustand ist, die Leerlauf-Rückführpassage dahingehend zu steuern, angeschaltet zu werden und die Hauptsteuerpassage, ausgeschaltet zu werden, wodurch das Zugrohr das Bremsluftreservoirrohr rückwärts beschickt;
in einem Fall, dass die Lokomotive als Hauptsteuerlokomotive fungiert, die Hauptsteuerpassage dahingehend zu steuern, angeschaltet zu werden, und die Leerlauf-Rückführpassage, ausgeschaltet zu werden, wodurch das Hauptluftrohr das Zugrohr beschickt; und
in einem Fall, dass die Lokomotive in einem angekoppelten Zustand ist, sowohl die Leerlauf-Rückführpassage als auch die Hauptsteuerpassage dahingehend zu steuern, ausgeschaltet zu werden.

2. Bremszustandschaltsteuersystem nach Anspruch 1,
wobei die Leerlauf-Rückführpassage ein Leerlauf-Absperrventil (5) aufweist, das Leerlauf-Absperrventil (5) mit einem elektromagnetischen Leerlauf-Absperrventil (1) verbunden ist, und in einem Fall, dass das elektromagnetische Leerlauf-Absperrventil (1) stromlos ist, das Leerlauf-Absperrventil (5) zurückgestellt wird, wodurch die Leerlauf-Rückführpassage angeschaltet wird; und
die Hauptsteuerpassage ein Beschickungs-Absperrventil (10) aufweist, wobei das Beschickungs-Absperrventil (10) mit einem elektromagnetischen Beschickungs-Absperrventil (9) verbunden ist, und in einem Fall, dass das elektromagnetische Beschickungs-Absperrventil (9) bestromt wird, das Beschickungs-Absperrventil (10) zurückgestellt wird, wodurch die Hauptsteuerpassage angeschaltet wird.

3. Bremszustandschaltsteuersystem nach Anspruch 2,
wobei die Leerlauf-Rückführpassage ferner ein Doppeldruck-Abgleichventil (3), ein Rückschlagventil (4), ein erstes Strömungsbegrenzungsloch (6), einen Sicherungs-Absperrhahn (7), und einen Druckschalter (8) zum Detektieren eines Drucks des Zugrohr aufweist, die in Reihe geschaltet sind, wobei sich das Leerlauf-Absperrventil (5) zwischen dem Rückschlagventil (4) und dem ersten Strömungsbegrenzungsloch (6) befindet, der Druckschalter (8) in der Nähe des Zugrohr befindet, das Doppeldruck-Abgleichventil (3) sich in der Nähe des Bremsluftreservoirrohrs befindet, ein Abgleichsstutzen des Doppeldruck-Abgleichventils (3) mit einem zweiten Strömungsbegrenzungsloch (2) verbunden ist und ein weiterer Abgleichsstutzen des Doppeldruck-Abgleichventils (3) mit dem Bremsluftreservoirrohr verbunden ist, nachdem er mit einem Auslassende des zweiten Strömungsbegrenzungslochs (2) zusammenläuft.

4. Bremszustandschaltsteuersystem nach Anspruch 2, wobei die Hauptsteuerpassage ferner ein Relaisventil (11) aufweist, das mit dem Beschickungs-Absperrventil (10) verbunden ist, ein Lufteinlass des Relaisventils (11) mit dem Hauptluftrohr verbunden ist, ein Luftauslass des Relaisventils (11) mit einem Lufteinlass des Beschickungs-Absperrventils (10) verbunden ist, und ein Luftauslass des Beschickungs-Absperrventils (10) mit dem Zugrohr verbunden ist.

5. Bremszustandschaltsteuersystem nach Anspruch 3, wobei der Druckschalter (8) ein Druckschalter ist, der in einem Fall, dass ein Druck des Zugrohrs dahingehend detektiert wird, niedriger zu sein als ein voreingestellter Druck, ausgeschaltet wird und in einem Fall, dass der Druck des Zugrohr dahingehend detektiert wird, größer zu sein als der voreingestellte Druck, angeschaltet wird, wobei eine Spanne des voreingestellten Drucks 460 kPa bis 480 kPa beträgt.

6. Bremszustandschaltsteuersystem nach Anspruch 3, wobei ein Lufteinlass des elektromagnetischen Leerlauf-Absperrventils (1) mit dem Bremsluftreservoirrohr verbunden ist und ein Luftauslass des elektromagnetischen Leerlauf-Absperrventils (1) mit einem Umsteuer-Steuergerät des Leerlauf-Absperrventils (5) verbunden ist.

7. Bremszustandschaltsteuersystem nach Anspruch 4, wobei ein Lufteinlass des elektromagnetischen Beschickungs-Absperrventils (9) mit dem Hauptluftrohr verbunden ist und ein Luftauslass des elektromagnetischen Beschickungs-Absperrventils (9) mit einem Umsteuer-Steuergerät des Beschickungs-Absperrventils (10) verbunden ist.

8. Bremszustandschaltsteuersystem nach einem der Ansprüche 2 bis 7, wobei die Steuerungsvorrichtung einen Statusknopf (S1) und eine zentrale Steuerungseinheit aufweist, wobei der Statusknopf (S1) mit der zentralen Steuerungseinheit verbunden ist und die zentrale Steuerungseinheit mit dem elektromagnetischen Leerlauf-Absperrventil (1) und dem elektromagnetischen Beschickungs-Absperrventil (9) verbunden ist;
wobei die zentrale Steuerungseinheit eine Bestromungssteuerungseinheit zum Steuern des Bestromens und nicht-Bestromens des elektromagnetischen Leerlauf-Absperrventils (1) und des elektromagnetischen Beschickungs-Absperrventils (9) gemäß unterschiedlichen Berührbefehlen, die von dem Statusknopf (S1) entgegengenommen wurden, aufweist.

9. Bremszustandschaltsteuersystem nach Anspruch 8, wobei die Steuerungsvorrichtung ferner einen Konsolenbelegungsschalter (S2) aufweist, und der Konsolenbelegungsschalter (S2) mit der zentralen Steuerungseinheit verbunden ist;
die zentrale Steuerungseinheit ferner eine Parkdetektionseinheit aufweist, um zu bestimmen, ob sich die Lokomotive in einem Stoppzustand befindet, nachdem der Konsolenbelegungsschalter (S2) eingeschaltet wurde, und die Parkdetektionseinheit mit der Bestromungssteuerungseinheit verbunden ist, wobei die Bestromungssteuerungseinheit das Bestromen und nicht-Bestromen des elektromagnetischen Leerlauf-Absperrventils (1) und des elektromagnetischen Beschickungs-Absperrventils (9) gemäß unterschiedlichen Berührbefehlen, die von dem Statusknopf (S1) entgegengenommen wurden, aufweist, in einem Fall, dass die Lokomotive sich in dem Stoppzustand befindet.

10. Bremszustandschaltsteuersystem nach Anspruch 8, wobei die Bestromungssteuerungseinheit aufweist:
eine Hauptsteuermodussteuerungseinheit, die konfiguriert ist, in einem Fall, dass der Statusknopf (S1) eine gerade Anzahl an Malen gedrückt wird, sowohl an das elektromagnetische Leerlauf-Absperrventil (1) als auch an das elektromagnetische Beschickungs-Absperrventil (9) einen Hochpegel auszugeben, um die Hauptsteuerpassage dahingehend zu steuern, angeschaltet zu werden, und die Leerlauf-Rückführpassage dahingehend zu steuern, ausgeschaltet zu werden, wodurch das Hauptluftrohr das Zugrohr beschickt;
eine Kopplungsmodussteuerungseinheit, die konfiguriert ist, in einem Fall, dass der Statusknopf (S1) eine ungerade Anzahl an Malen gedrückt wird, an das elektromagnetische Leerlauf-Absperrventil (1) einen Hochpegel auszugeben und an das elektromagnetische Beschickungs-Absperrventil (9) einen Niedrigpegel auszugeben, um sowohl die Leerlauf-Rückführpassage als auch die Hauptsteuerpassage dahingehend zu steuern, abgeschaltet zu werden; und
eine Leerlaufmodussteuerungseinheit, die konfiguriert ist, in einem Fall, dass der Statusknopf (1) eine ungerade Anzahl an Malen gedrückt wird und die Drückdauer die voreingestellte Zeitspanne überschreitet, an das elektromagnetische Leerlauf-Absperrventil (1) und an das elektromagnetische Beschickungs-Absperrventil (9) einen Niedrigpegel auszugeben, um die Leerlauf-Rückführpassage dahingehend zu steuern, angeschaltet zu werden und die Hauptsteuerpassage dahingehend zu steuern, ausgeschaltet zu werden, wodurch das Zugrohr das Bremsluftreservoirrohr rückwärts beschickt.

11. Bremszustandschaltsteuersystem nach Anspruch 10,
wobei die Hauptsteuermodussteuerungseinheit ferner eine Statusleuchtenhauptsteuermodus-Steuerungssubeinheit aufweist, um eine Statusleuchte in einem Fall, bei dem sowohl an das elektromagnetische Leerlauf-Absperrventil (1) als auch an das elektromagnetische Beschickungs-Absperrventil (9) ein Hochpegel ausgegeben wird, dahingehend zu steuern, in einem ersten Zustand zu arbeiten;
die Kopplungsmodussteuerungseinheit ferner eine Statusleuchtenkopplungsmodus-Steuerungssubeinheit aufweist, um die Statusleuchte in einem Fall, bei dem an das elektromagnetische Leerlauf-Absperrventil (1) ein Hochpegel ausgegeben wird und an das elektromagnetische Beschickungs-Absperrventil (9) ein Niedrigpegel ausgegeben wird, dahingehend zu steuern, in einem zweiten Zustand zu arbeiten; und
die Leerlaufmodussteuerungseinheit ferner eine Statusleuchtenleerlaufmodus-Steuerungssubeinheit aufweist, um die Statusleuchte in einem Fall, bei dem sowohl an das elektromagnetische Leerlauf-Absperrventil (1) als auch das elektromagnetische Beschickungs-Absperrventil (9) ein Niedrigpegel ausgegeben wird, dahingehend zu steuern, in einem dritten Zustand zu arbeiten.

12. Lokomotive, aufweisend das Bremszustandschaltsteuersystem nach einem der Ansprüche 1 bis 11.

## Revendications

1. Système de commande de transition d'état de freinage, comprenant :
un passage de retour à vide, dans lequel une extrémité du passage de retour à vide est reliée à un tuyau de train et une autre extrémité du passage de retour à vide est reliée à un tuyau de réservoir d'air de frein ;
un passage de commande principal, dans lequel une extrémité de passage de commande principal est reliée au tuyau de train et une autre extrémité du passage de commande principal est reliée à un tuyau d'air principal ; et
un dispositif de commande, dans lequel le dispositif de commande est configuré pour activer et désactiver le passage de retour à vide et le passage de commande principal pour :
- commander, si une locomotive est dans un état à vide, l'activation du passage de retour à vide et la désactivation du passage de commande principal, dans lequel le tuyau de train charge le tuyau de réservoir d'air de frein à l'envers ;
- commander, si la locomotive fonctionne comme une locomotive de commande principale, l'activation du passage de commande principal et la désactivation du passage de retour à vide, dans lequel le tuyau d'air principal charge le tuyau de train ; et
- commander, si la locomotive fonctionne dans un état couplé, la désactivation à la fois du passage de retour à vide et le passage de commande principal.

2. Système de commande de transition d'état de freinage selon la revendication 1,
dans lequel le passage de retour à vide comprend une soupape d'arrêt à vide (5), la soupape d'arrêt à vide (5) est reliée à une soupape électromagnétique d'arrêt à vide (1), et, si la soupape électromagnétique d'arrêt à vide (1) est mise hors tension, la soupape d'arrêt à vide (5) est réinitialisée, tandis que le passage de retour à vide est activé ; et
le passage de commande principal comprend une soupape d'arrêt de charge (10), dans lequel la soupape d'arrêt de charge (10) est reliée à une soupape électromagnétique d'arrêt de charge (9), et, si la soupape électromagnétique d'arrêt de charge (9) est mise sous tension, la soupape d'arrêt de charge (10) est réinitialisée, tandis que le passage de commande principal est activé.

3. Système de commande de transition d'état de freinage selon la revendication 2, dans lequel le passage de retour à vide comprend en outre une soupape de référence à double pression (3), une soupape anti-retour (4), un premier trou de limitation de débit (6), un robinet de coupure (7) et un interrupteur manométrique (8) pour détecter une pression du tuyau de train, lesquels sont reliés de manière séquentielle, dans lequel la soupape d'arrêt à vide (5) est située entre la soupape anti-retour (4) et le premier trou de limitation de débit (6), l'interrupteur manométrique (8) est situé à proximité du tuyau de train, la soupape de référence à double pression (3) est située à proximité du tuyau de réservoir d'air de frein, un orifice de référence de la soupape de référence à double pression (3) est relié à un deuxième trou de limitation de débit (2), et un autre orifice de référence de la soupape de référence à double pression (3) est relié au tuyau de réservoir d'air de frein après avoir fusionné avec une extrémité de sortie du deuxième trou de limitation de débit (2).

4. Système de commande de transition d'état de freinage selon la revendication 2, dans lequel le passage de commande principal comprend en outre une soupape-relais (11) reliée à la soupape d'arrêt de charge (10), une entrée d'air de la soupape-relais (11) est reliée au tuyau d'air principal, une sortie d'air de la soupape-relais (11) est reliée à une entrée d'air de la soupape d'arrêt de charge (10), et une sortie d'air de la soupape d'arrêt de charge (10) est reliée au tuyau de train.

5. Système de commande de transition d'état de freinage selon la revendication 3, dans lequel l'interrupteur manométrique (8) est un interrupteur manométrique qui est désactivé s'il est détecté qu'une pression du tuyau de train est inférieure à une pression préprogrammée et est activé s'il est détecté que la pression du tuyau de train est supérieure à une pression préprogrammée, dans lequel une plage de pressions préprogrammée va de 460 kPa à 480 kPa.

6. Système de commande de transition d'état de freinage selon la revendication 3, dans lequel une entrée d'air de la soupape électromagnétique d'arrêt à vide (1) est reliée au tuyau de réservoir d'air de frein, et une sortie d'air de la soupape électromagnétique d'arrêt à vide (1) est reliée à une unité de commande d'inversion de la soupape d'arrêt à vide (5).

7. Système de commande de transition d'état de freinage selon la revendication 4, dans lequel une entrée d'air de la soupape électromagnétique d'arrêt de charge (9) est reliée au tuyau d'air principal, et une sortie d'air de la soupape électromagnétique d'arrêt de charge (9) est reliée à une unité de commande d'inversion de la soupape d'arrêt de charge (10).

8. Système de commande de transition d'état de freinage selon l'une quelconque des revendications 2 à 7, dans lequel le dispositif de commande comprend un bouton d'état (S1) et une unité de commande centrale, le bouton d'état (S1) est relié à l'unité de commande centrale, et l'unité de commande centrale est reliée à la soupape électromagnétique d'arrêt à vide (1) et à la soupape électromagnétique d'arrêt de charge (9) ;
dans lequel l'unité de commande centrale comprend une unité de commande d'alimentation en puissance pour commander la mise sous tension et la mise hors tension de la soupape électromagnétique d'arrêt à vide (1) et la soupape électromagnétique d'arrêt de charge (9) selon différentes instructions tactiles reçues par le bouton d'état (S1).

9. Système de commande de transition d'état de freinage selon la revendication 8, dans lequel le dispositif de commande comprend en outre un interrupteur d'occupation de console (S2), et l'interrupteur d'occupation de console (S2) est relié à l'unité de commande centrale ;
l'unité de commande centrale comprend en outre une unité de détection de stationnement pour déterminer si la locomotive est à l'arrêt après que l'interrupteur d'occupation de console (S2) a été activé, et l'unité de détection de stationnement est reliée à l'unité de commande d'alimentation en puissance, tandis que l'unité de commande d'alimentation en puissance commande la mise sous tension et la mise hors tension de la soupape électromagnétique d'arrêt à vide (1) et de la soupape électromagnétique d'arrêt de charge (9) selon les différentes instructions tactiles reçues par le bouton d'état (S1) si la locomotive est à l'arrêt.

10. Système de commande de transition d'état de freinage selon la revendication 8, dans lequel l'unité de commande d'alimentation en puissance comprend :
une unité de commande de mode de commande principale configurée pour délivrer un niveau élevé à la fois à la soupape électromagnétique d'arrêt à vide (1) et à la soupape électromagnétique d'arrêt de charge (9) si le bouton d'état (S1) est enfoncé un nombre de fois pair, pour commander l'activation du passage de commande principal et la désactivation du passage de retour à vide, tandis que le tuyau d'air principal charge le tuyau de train ;
une unité de commande de mode couplé configuré pour délivrer un niveau élevé à la soupape électromagnétique d'arrêt à vide (1) et pour délivrer un niveau bas à la soupape électromagnétique d'arrêt de charge (9) si le bouton d'état (S1) est enfoncé un nombre de fois impair et un temps pour enfoncer se situe dans une plage de temps préprogrammée, pour commander la désactivation à la fois du passage de retour à vide et du passage de commande principal ; et
une unité de commande de mode à vide configurée pour délivrer un niveau bas à la soupape électromagnétique d'arrêt à vide (1) et à la soupape électromagnétique d'arrêt de charge (9) si le bouton d'état (S1) est enfoncé un nombre de fois impair et le temps pour enfoncer dépasse la plage de temps préprogrammée, pour commander l'activation du passage de retour à vide et la désactivation du passage de commande principal, tandis que le tuyau de train charge le tuyau de réservoir d'air de frein à l'envers.

11. Système de commande de transition d'état de freinage selon la revendication 10,
dans lequel l'unité de commande de mode de commande principale comprend en outre une sous-unité de commande de mode de commande principal de voyant lumineux pour commander un voyant lumineux pour fonctionner dans un premier état si un niveau élevé est délivré à la fois à la soupape électromagnétique d'arrêt à vide (1) et la soupape électromagnétique d'arrêt de charge (9) ;
l'unité de commande de mode couplé comprend en outre un voyant lumineux couplé à la sous-unité de commande de mode couplé pour commander le voyant lumineux pour fonctionner dans un deuxième état si un niveau élevé est délivré à la soupape électromagnétique d'arrêt à vide (1) et un niveau bas est délivré à la soupape électromagnétique d'arrêt de charge (9) ; et
l'unité de commande de mode à vide comprend en outre une sous-unité de commande de mode à vide de voyant lumineux pour commander le voyant lumineux pour fonctionner dans un troisième état si un niveau bas est délivré à la fois à la soupape électromagnétique d'arrêt à vide (1) et à la soupape électromagnétique d'arrêt de charge (9).

12. Locomotive comprenant le système de commande de transition d'état de freinage selon l'une quelconque des revendications 1 à 11.
